# EUROPÄISCHE PATENTSCHRIFT

(11) **EP 0 399 501 B1**
(45) Veröffentlichungstag und Bekanntmachung des Hinweises auf die Patenterteilung: **31.08.1994**
(21) Anmeldenummer: 90109823.6
(22) Anmeldetag: 23.05.1990
(51) Int. Cl.: D03D 39/18

(54) **Schneidvorrichtung einer Webmaschine für Doppelgewebe, insbesondere ihr Antrieb, und eine mit einer solchen Schneidvorrichtung ausgerüstete Webmaschine**
Cutting device for a double plush loom, especially its drive mechanism and a loom with such a cutting device
Dispositif de coupe pour un métier à double peluche, plus particulièrement son entraînement et métier à tisser pourvu d'un tel dispositif de coupe

(30) Priorität: 26.05.1989 BE 8900567
(43) Veröffentlichungstag der Anmeldung: 28.11.1990
(73) Patentinhaber: N.V. Michel Van de Wiele, B-8510 Kortrijk (Marke) (BE)
(72) Erfinder: Debaes Johnny, B-8410 Wenduine (BE)
(74) Vertreter: Prechtel, Jörg, Dipl.-Phys. Dr.

(56) Entgegenhaltungen:
- BE-A- 904 573
- DE-A- 2 852 424

## Beschreibung

Die Erfindung betrifft die Schneidvorrichtung für eine Webmaschine für Doppelgewebe gemäß dem Oberbegriff des Anspruchs 1. Eine solche Schneidvorrichtung durchschneidet die Polfäden, welche beide Grundgewebe verbinden, so daß zwei getrennte Polgewebe erhalten werden. Der Schneidmesserträger bewegt sich auf der in der Breite der Webmaschine angeordneten Führungseinheit (Schneidbank) hin und her und durchschneidet bei jedem Durchgang eine Reihe von Polfäden.

Die EP-A-0 241 036 zeigt eine Schneidvorrichtung dieser Art mit einer Antriebsrollenanordnung in Form einer Antriebstrommel sowie insgesamt fünf Umlenkrollenanordnungen zur Umlenkung des Seils längs der Seilschleife, jeweils bestehend aus einer einzigen Rolle. Der Umschlingungswinkel des Seils an den Umlenkrollen beträgt 40° bzw. 90° bzw. 120°. Es hat sich nun herausgestellt, daß der Seilverschleiß beim Betrieb dieser bekannten Anordnung mit den heutzutage mehr und mehr angewandten hohen Geschwindigkeiten ziemlich groß ist.

Die Aufgabe der Erfindung liegt darin, eine Schneidvorrichtung der gattungsgemäßen Art mit größerer Betriebssicherheit bereit zustellen.

Diese Aufgabe wird durch die kennzeichnenden Merkmale des Anspruchs 1 in Verbindung mit den Merkmalen des Oberbegriffs gelöst. Aufgrund der Führung des Seils über zwei unmittelbar aufeinanderfolgende Rollen der Umlenkrollenanordnung mit entgegengesetzter Krümmung bei einem jeweiligen Anlagewinkel von mindestens 150°, ergibt sich ein inniger Kontakt des Seils bzw. Riemens mit den Rollen, welcher den Schlupf zwischen Schnur bzw. Riemen und Rolle trotz der hohen Wechselbeschleunigungen des Seils während des Webmaschinenbetriebs entscheidend reduziert. Durch Unterbinden des Schlupfs wird dementsprechend der Abrieb von Seil bzw. Riemen und Rollen entscheidend reduziert. Der erfindungsgemäße Aufbau der jeweiligen Umlenkrollenanordnung aus wenigstens zwei Rollen ermöglicht die Reduzierung der freien Spannweite der Schnur, wodurch der Entstehung von transversalen Schwingungsbäuchen entgegengewirkt wird. Auch können Umlenkrollen mit relativ geringem Radius und damit mit vergleichsweise geringem Umlenkrollen-Gesamtträgheitsmoment im Vergleich zu einer einzelnen Umlenkrolle mit dementsprechend größerem Durchmesser eingesetzt werden, so daß die bei der ständigen Wechselbeschleunigung auftretenden Reaktionskräfte sich dementsprechend reduzieren, was den Seilverschleiß wiederum vermindert.

Die Unteransprüche geben besonders vorteilhafte Weiterbildungen des Gegenstands des Anspruchs 1 an.

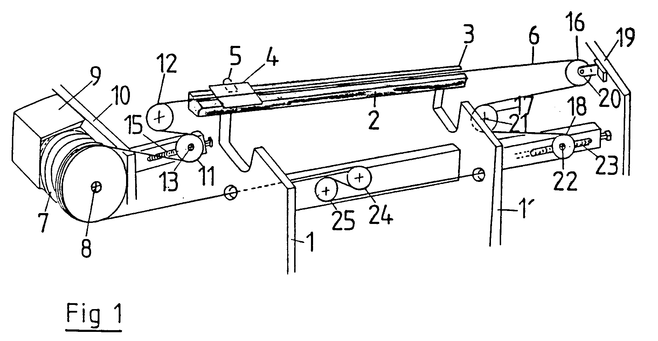

Weitere Merkmale und Vorteile werden in der hier folgenden Beschreibung der Schneidvorrichtung einer Webmaschine für Doppelgewebe gemäß der Erfindung erscheinen, wobei die beigefügte Figur 1 eine schematische Darstellung solch einer Schneidvorrichtung ist.

Auf dem mittleren Hauptrahmen 1 und 1' einer Webmaschine für Doppelgewebe befindet sich eine längliche Führungseinheit in Form einer Schneidbank 2, die sich über die Webmaschinenbreite erstreckt und mit einer Rille 3, in der sich die Schnur 6 befindet, und auch mit einer Schwalbenschwanzführung versehen ist, an der sich ein Schneidmesserträger in Form eines Schneidwagens 4 hin- und herbewegt, der mit einem Messer 5 ausgestattet ist.

Der Schneidwagen 4 ist in einem geschlossenen Kreislauf fest an einer Schnur 6 angebunden. Bei der bestimmten Ausführungsform gemäß der Erfindung - wie in Fig. 1 dargestellt - ist die Schnur 6 in mehreren Windungen auf eine Antriebsrollenanordnung in Form einer Trommel aufgewickelt, deren Achse 8 einer hin- und hergehenden Drehbewegung eines sog. Planeten-Getriebes oder ggf. eines Zykloid-Getriebes unterworfen ist. Das Gehäuse 9 mit dem Planeten-Getriebe ist an einem seitlichen Rahmen 10 der Webmaschine festgemacht, an dem auch eine erste Umlenkrollenanordnung aus zwei Umlenkrollen (Führungsräder) 11 und 12 zwischen dem seitlichen Rahmen 10 und dem Hauptrahmen 1 befestigt ist, um die die Schnur einen S-förmigen Verlauf zwischen der Trommel 7 und der einen Seite der Schneidebank 2 einschlägt. Dieser S-förmige Verlauf liegt in einer ebenen Fläche, die von den Kehllinien der Führungsrollen gebildet wird. Das Führungsrad 11 ist drehbar auf einer verstellbar angebrachten Achse 13 montiert, wobei die Verstellung mit Hilfe einer Spindel 15 erfolgt. Das Führungsrad 12 ist derart angeordnet, daß die Schnur 6 in der Rille 3 läuft und der Schneidwagen 4 leicht auf der Schneidebank hin und her gezogen wird. Das Führungsrad 11 ist so angeordnet, daß es zusammen mit dem Führungsrad 12 eine S-förmig gebogene Schnur in nur einer Ebene hervorruft, wobei die Anlagewinkel an den Führungsrollen mindestens 150° betragen.

An der anderen Seite der Schnittbank 2 befindet sich eine zweite Umlenkrollenanordnung aus drei Umlenkrollen (Führungsrädern) 16,17 und 18, durch die die Schnur 6 einen doppelten, S-förmigen Verlauf innerhalb ein und derselben ebenen Fläche erhält. Die Führungsräder 16,17 und 18 sind drehbar auf ihrer geweiligen Achse 20, 21 bzw. 22 montiert, wobei die Achse 20 mit Hilfe eines Trägers an dem seitlichen Rahmen 19 und die Achse 21 mit Hilfe eines Trägers an dem Hauptrahmen 1' befestigt sind, während die Achse 22 des Führungsrades mit einer Spindel 23 in einem gewissen Abstand von der Achse 21 so eingestellt wird, daß der Anlagewinkel der Schnur 6 an den Führungsrädern 16,17 und 18 mindestens 150° beträgt, und die Vorspannung der Schnur je nach Wunsch einreguliert werden kann.

Zwischen den Hauptrahmen 1 und 1' befindet sich an dem rücklaufenden Teil der Schnur 6 zu der anderen Seite der Trommel hin eine dritte Umlenkrollenanordnung aus zwei Umlenkrollen (Führungsrädern) 24 und 25, um die die Schnur 6 einen S-förmigen Verlauf annimmt, bei dem die Anlagewinkel mindestens 150° betragen.

Bei dieser Anordnungsweise der Führungsrollen 24,25 wird einmal die freie Spannweite der Schnur 6 begrenzt, wodurch der Entstehung von transversalen Schwingungsbäuchen an der Schnur 6 entgegengewirkt wird. Zum anderen wird durch den ziemlich großen Anlagewinkel der Schnur 6 an den Führungsrädern 24,25 von mindestens 150° der Schlupf zwischen der Schnur 6 und der Führungsrolle beschränkt, so daß die Schnur 6 einem geringeren Verschleiß unterliegt. Zum dritten wird die Schnur 6 bei dieser Anordnung nur in einer Richtung bzw. Ebene umgelenkt, wodurch ihre Lebensdauer selbst bei höheren Drehzahlen der Webmaschine wesentlich erhöht wird.

Aufgrund der Verwendung dreier Führungsrollen 14,17,18 bei einer 180°-Umlenkung der Seilschleife erhält man eine vergleichsweise geringere Umlenkrollen-Gesamtmasse bzw. Umlenkrollen-Gesamtträgheitsmoment im Vergleich zu einer einzelnen Umlenkrolle mit dementsprechend größerem Durchmesser. Die bei der ständigen Wechselbeschleunigung beim Betrieb der Schneidvorrichtung auftretenden Reaßtionskräfte sind dementsprechend reduziert, was den Seilverschleiß dementsprechend vermindert. Diese Umlenkrollenanordnung aus drei Rollen sowie die von zwei Rollen gebildete Umlenkanordnung im geraden Abschnitt der Seilschleife zur Verhinderung von Schwingungen des Seils läßt sich auch bei einem Antrieb der Schneidvorrichtung einsetzen, bei welchem die Seilbewegung mit Hilfe einer Flaschenzuganordnung erfolgt. Besonders vorteilhaft ist jedoch der Einsatz in Verbindung mit einem Antrieb über Auf- und Abwickeltrommel 7, da die während des Betriebs zu bewegenden Massen aufgrund des Wegfalls der Linearbewegung der Flaschenzugrollen entscheidend reduziert sind. Auch ist der Einsatz eines Riemens oder dergl. anstelle des Seils 6 denkbar, wenn auch die Verwendung eines Seils 6 aufgrund dessen einfacher Führung über Umfangsnut in der entsprechenden Umlenkrolle bevorzugt ist.

## Patentansprüche

1. Schneidvorrichtung für eine Webmaschine für Doppelgewebe, umfassend
- ein Schneidmesser (5);
- einen Schneidmesserträger (4);
- eine langgestreckte Führungseinheit (2) für den Schneidmesserträger (4) längs der der Schneidmesserträger (4) hin und her bewegbar ist;
- einen Seil- oder Riemenantrieb mit einer Antriebsrollenanordnung (7) und einer von der Antriebsrollenanordnung (7) angetriebenen Seil- bzw. Riemenschleife, die an deren Schneidmesserträger (4) angreift;
- wenigstens eine Umlenkrollenanordnung jeweils zur Umlenkung des Seils (6) bzw. Riemens längs der Seil- bzw. Riemenschleife in einer durch die jeweilige Umlenkrollenanordnung festgelegten Ebene,
**dadurch gekennzeichnet,**
daß die wenigstens eine Umlenkrollenanordnung wenigstens zwei Rollen umfaßt, und daß das Seil (6) bzw. der Riemen über zwei unmittelbar aufeinanderfolgende Rollen jeweils längs einer S-förmigen Bahn geführt ist mit entgegengesetzter Krümmung des Seils bzw. des Riemens auf den beiden Rollen und mit einem Anlagewinkel des Seils (6) bzw. des Riemens an der jeweiligen Rolle von mindestens 150°.

2. Schneidvorrichtung nach Anspruch 1, **dadurch gekennzeichnet,** daß eine (Rollen 11, 12) der Umlenkrollenanordnungen zwischen einem Hauptrahmen (1, 1') und einem die Antriebsrollenanordnung (7) tragenden Seitenrahmen (10) der Webmaschine angeordnet ist.

3. Schneidvorrichtung nach Anspruch 1 oder 2, **dadurch gekennzeichnet**, daß bei einem ca. 180° Umlenkungsabschnitt der Seil- bzw. Riemenschleife die Umlenkrollenanordnung von 3 Rollen (16, 17, 18) gebildet ist.

4. Schneidvorrichtung nach Anspruch 3, **dadurch gekennzeichnet**, daß die von den 3 Rollen (16, 17, 18) gebildete Umlenkrollenanordnung zwischen dem Hauptrahmen (1, 1') und einem Seitenrahmen (19) der Webmaschine auf der der Antriebsrollenanordnung (7) gegenüberliegenden Seite angeordnet ist.

5. Schneidvorrichtung nach einem der vorhergehenden Ansprüche, **dadurch gekennzeichnet**, daß in einem geraden Abschnitt der Seil- bzw. Riemenschleife zur Verhinderung von Schwingungen des Seils (6) bzw. Riemens eine von 2 Rollen (24, 25) gebildete Umlenkrollenanordnung vorgesehen ist.

6. Schneidvorrichtung nach Anspruch 5, **dadurch gekennzeichnet**, daß die von den 2 Rollen (24, 25) gebildete Rollenanordnung im Bereich des Hauptrahmens (1, 1') angeordnet ist.

7. Schneidvorrichtung nach einem der vorhergehenden Ansprüche, **dadurch gekennzeichnet**, daß mindestens eine Rolle (11, 18) der Umlenkrollenanordnung verschiebbar angeordnet ist.

8. Schneidvorrichtung nach Anspruch 7, **gekennzeichnet** durch eine einregulierbare Spindel (23, 15) zur Verschiebung dar Rolle (11, 18).

9. Webstuhl, der mit einer Schneidvorrichtung gemäß einem der vorhergehenden Ansprüche ausgerüstet ist.

## Claims

1. Cutting device for a weaving machine for double fabrics, comprising
- a cutting knife (5);
- a cutting-knife carrier (4);
- an elongate guide unit (2) for the cutting-knife carrier (4), along which the cutting knife carrier (4) is movable to and fro;
- a rope drive or belt drive with a driving-roller arrangement (7) and with a rope loop or belt loop which is driven by the driving-roller arrangement (7) and which engages on its cutting-knife carrier (4);
- at least one deflecting-roller arrangement respectively for deflecting the rope (6) or belt along the rope loop or belt loop in a plane fixed by the respective deflecting-roller arrangement,
characterized
in that the at least one deflecting-roller arrangement comprises at least two rollers, and in that the rope (6) or belt is guided respectively along an S-shaped path via two rollers directly succeeding one another, with an opposite curvature of the rope or belt on the two rollers and with a bearing angle of the rope (6) or belt on the respective roller of at least 150°.

2. Cutting device according to Claim 1, characterized in that one (rollers 11, 12) of the deflecting-roller arrangements is arranged between a main frame (1, 1') and a side frame (10), carrying the driving-roller arrangement (7), of the weaving machine.

3. Cutting device according to Claim 1 or 2, characterized in that, with an approximately 180°-deflection portion of the rope loop or belt loop, the deflecting-roller arrangement is formed by 3 rollers (16, 17, 18).

4. Cutting device according to Claim 3, characterized in that the deflecting-roller arrangement formed by the 3 rollers (16, 17, 18) is arranged between the main frame (1, 1') and a side frame (19) of the weaving machine on the side located opposite the driving-roller arrangement (7).

5. Cutting device according to one of the preceding claims, characterized in that a deflecting-roller arrangement formed by 2 rollers (24, 25) is provided in a straight portion of the rope loop or belt loop in order to prevent vibrations of the rope (6) or belt.

6. Cutting device according to Claim 5, characterized in that the roller arrangement formed by the 2 rollers (24, 25) is arranged in the region of the main frame (1, 1').

7. Cutting device according to one of the preceding claims, characterized in that at least one roller (11, 18) of the deflecting-roller arrangement is arranged displaceably.

8. Cutting device according to Claim 7, characterized by an adjustable spindle (23, 15) for displacing the roller (11, 18).

9. Loom which is equipped with a cutting device according to one of the preceding claims.

## Revendications

1. Dispositif de coupe pour un métier automatique pour tissu double, comprenant
- un couteau (5);
- un porte-couteau (4);
- une unité de guidage allongée (2) pour le porte-couteau (4) le long de laquelle le porte-couteau (4) se déplace en va-et-vient;
- un système d'entraînement par câble ou courroie avec un agencement de rouleau d'entraînement (7) et une boucle de câble respectivement de courroie entraînée par l'agencement de rouleau d'entraînement (7), qui est attachée à son porte-couteau (4);
- au moins un groupe de rouleaux de déviation respectifs pour la déviation du câble (6) respectivement de la courroie le long de la bouche de câble respectivement de courroie dans un plan déterminé par le groupe de rouleaux de déviation corres-pondant,
caractérisé en ce que
ledit au moins un groupe de rouleaux de déviation comporte au moins deux rouleaux, et en ce que le câble (6) respectivement la courroie est guidé sur deux rouleaux se succédant directement le long d'un trajet en S avec une courbure opposée du câble respectivement de la courroie sur les deux rouleaux et avec un angle d'enroulement du câble (6) respectivement de la courroie sur chaque rouleau d'au moins 150°.

2. Dispositif de coupe suivant la revendication 1, caractérisé en ce qu'un (rouleaux 11, 12) des groupes de rouleaux de déviation est disposé entre un cadre principal (1, 1') et un cadre latéral (10) portant l'agencement de rouleau d'entraînement (7) du métier auto-matique.

3. Dispositif de coupe suivant la revendication 1 ou 2, caractérisé en ce que, pour un tronçon de déviation d'environ 180° de la bouche de câble respectivement de courroie, le groupe de rouleaux de déviation est constitué de trois rouleaux

4. Dispositif de coupe suivant la revendication 3, caractérisé en ce que le groupe de rouleaux de déviation constitué de trois rouleaux (16, 17, 18) est disposé entre le cadre principal (1, 1') et un cadre latéral (19) du métier automatique, sur le côté opposé à l'agencement de rouleau d'entraînement (7).

5. Dispositif de coupe suivant l'une des revendications précédentes, caractérisé en ce que, dans un tronçon rectiligne de la boucle de câble respectivement de courroie, il est prévu un groupe de rouleaux de déviation constitué de deux rouleaux (24, 25) pour empêcher les oscillations du câble (6) respectivement de la courroie.

6. Dispositif de coupe suivant la revendication 5, caractérisé en ce que le groupe de rouleaux constitué des 2 rouleaux (24, 25) est disposé dans la région du cadre principal (1, 1').

7. Dispositif de coupe suivant l'une des revendications précédentes, caractérisé en ce qu'au moins un rouleau (11, 18) du groupe de rouleaux de déviation est déplaçable.

8. Dispositif de coupe suivant la revendication 7, caractérisé par une broche (23, 15) réglable pour le déplacement du rouleau (11, 18).

9. Métier à tisser, qui est équipé d'un dispositif de coupe suivant l'une des revendications précédentes.
